(19) Europäisches Patentamt
European Patent Office
Office européen des brevets

(11) **EP 2 788 542 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **12795471.7**

(22) Anmeldetag: **06.12.2012**

(51) Int Cl.:
*H01B 13/00* (2006.01)  *H01B 1/02* (2006.01)
*C08J 5/06* (2006.01)  *H01B 1/04* (2006.01)
*D06M 11/74* (2006.01)  *B82Y 30/00* (2011.01)
*D06M 11/83* (2006.01)  *D06M 15/55* (2006.01)
*D06M 15/564* (2006.01)  *D06M 23/08* (2006.01)
*D06M 101/40* (2006.01)

(86) Internationale Anmeldenummer:
**PCT/EP2012/074649**

(87) Internationale Veröffentlichungsnummer:
**WO 2013/083696 (13.06.2013 Gazette 2013/24)**

(54) **KOHLENSTOFFFASER FÜR VERBUNDWERKSTOFFE MIT VERBESSERTER LEITFÄHIGKEIT**

CARBON FIBRE FOR COMPOSITE MATERIALS WITH ENHANCED CONDUCTIVITY

FIBRE DE CARBONE POUR MATÉRIAUX COMPOSITES PRÉSENTANT UNE CONDUCTIVITÉ AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2011 EP 11192309**

(43) Veröffentlichungstag der Anmeldung:
**15.10.2014 Patentblatt 2014/42**

(73) Patentinhaber: **Toho Tenax Europe GmbH**
**42103 Wuppertal (DE)**

(72) Erfinder:
• **WITZEL, Silke**
**45665 Recklinghausen (DE)**
• **WOHLMANN, Bernd**
**40627 Düsseldorf (DE)**
• **STÜSGEN, Silke**
**41464 Neuss (DE)**

(74) Vertreter: **CPW GmbH**
**Kasinostraße 19-21**
**42103 Wuppertal (DE)**

(56) Entgegenhaltungen:
EP-A2- 0 149 763  WO-A1-2010/007163
US-A1- 2010 104 868

EP 2 788 542 B1

## Beschreibung

Die Erfindung betrifft leitfähig ausgerüstete Kohlenstofffasern, welche zu einer verbesserten Leitfähigkeit bei faserverstärkten Verbundwerkstoffen führen. Sie betrifft darüber hinaus faserverstärkte Verbundwerkstoffe mit verbesserter Leitfähigkeit.

Zur Verbesserung der Leitfähigkeit von faserverstärkten Verbundwerkstoffen ist die Verwendung von Kohlenstofffasern bekannt, die mit einer Metallbeschichtung versehen sind. Derartige Fasern und deren Herstellung werden beispielsweise in der EP-A-0 149 763 A beschrieben. Kommerziell erhältliche Kohlenstofffasern mit einer Nickel-Beschichtung führen zu einer verbesserten Leitfähigkeit bei damit hergestellten Verbundwerkstoffen. Jedoch weisen solche Verbundwerkstoffe auf Basis Nickel-beschichteter Kohlenstofffasern den Nachteil eines hohen spezifischen Gewichts auf, der auf den zum Erreichen einer guten Leitfähigkeit erforderlichen Nickelanteil in Höhe von 30-40 Gew.-%, bezogen auf das Fasergewicht. Darüber hinaus ist auch die Verwendung nickel-beschichteter Kohlenstofffasern wegen der Gesundheits- und Sicherheitsrisiken problematisch.

In einer Alternative werden zur Verbesserung der Leitfähigkeit von Verbundwerkstoffen auf Basis von Kohlenstofffasern flächige Metallnetzwerke z.B. aus Kupfer z.B. in Form von Gittern oder Geweben auf den Verbundwerkstoffen angebracht und/oder in die Verbundwerkstoffe eingebracht. Als Materialien werden vielfach Kupfer oder Aluminium eingesetzt. Hierdurch lassen sich im Vergleich zu Verbundwerkstoffen auf Basis Nickel-beschichteter Kohlenstofffasern geringere spezifische Gewichte bei guter Leitfähigkeit in Erstreckungsrichtung der Metallnetzwerke realisieren. Allerdings ist die Leitfähigkeit senkrecht zur Erstreckung der Metallnetzwerke, d.h. in Dickenrichtung der Verbundwerkstoffe unzureichend. Darüber hinaus die Drapierfähigkeit solcher Metallnetzwerke bei der Herstellung von Bauteilen mit gekrümmten Geometrien oftmals nicht zufrieden stellend.

Es ist ebenfalls bekannt, zur Verbesserung der Leitfähigkeit von Verbundwerkstoffen Kohlenstofffasern einzusetzen, die eine Garnpräparation aufweisen, die Kohlenstoff-Nanoröhrchen ("carbon nanotubes" (CNT), Nanotubes) enthält. Ein Verfahren zur Herstellung von duromeren Polymerverbundwerkstoffen auf Basis von Fasern, die eine Nanotubes enthaltende Präparation aufweisen, wird z.B. in der WO 2010/007163 offenbart. Die US 2010/0260998 bezieht sich auf Formulierungen für Präparationen, die Nanopartikel enthalten, und auf Fasern, die mit einer Präparationen versehen sind, in der Nanopartikel dispergiert sind.

Die US 2010/0104868 offenbart Hybridfasern mit einer Beschichtung aus mehreren Komponenten, wobei diese Beschichtung durch simultane Ablagerung von Nanopartikeln und einem Metall über elektrophoretische bzw. über galvanische Prozesse hergestellt wird. Die simultane Ablagerung führt dazu, dass die Nanopartikel in das Metall eingelagert werden und vom Metall umschlossen sind und beide an der Faseroberfläche anhaften, so dass eine Mischstruktur erhalten wird. Kohlenstofffasern, auf deren Oberfläche eine Metallschicht aufgebracht ist, die Nanopartikel enthält, werden auch in der WO 2011/000394 offenbart.

Obwohl mittels der bekannten Maßnahmen eine Verbesserung der Leitfähigkeit von Faserverbundwerkstoffen erreicht wird, besteht ein Bedarf an weiteren Verbesserungen im Hinblick auf die Leitfähigkeit von Kohlenstofffaserverstärkten Verbundwerkstoffen.

Daher ist es Aufgabe der vorliegenden Erfindung, Verstärkungsfasern zur Verfügung zu stellen, die zu einer verbesserten Leitfähigkeit der damit hergestellten Verbundwerkstoffe führen. Es ist ebenfalls eine Aufgabe der vorliegenden Erfindung, Verbundwerkstoffe mit verbesserter Leitfähigkeit zu Verfügung zu stellen.

Die Aufgabe wird durch eine leitfähig ausgerüstete Kohlenstoffaser gelöst, bestehend aus Kohlenstofffaserfilamenten, welche eine Metallbeschichtung aufweisen, dadurch gekennzeichnet, dass die Kohlenstofffaserfilamente eine sich auf der Metallbeschichtung befindliche Präparation auf Basis mindestens einen polymeren Binders aufweisen, welche leitfähige Nanopartikel enthält und dass die Konzentration der Metallbeschichtung 8 bis 25 Gew.-% und die Konzentration der leitfähigen Nanopartikel 0,1 bis 1 Gew.-% beträgt, jeweils bezogen auf das Gewicht der mit der Metallbeschichtung und Präparation versehenen Kohlenstofffaser.

Es hat sich gezeigt, dass mit solchermaßen beschichteten Kohlenstofffasern Verbundwerkstoffe erhalten werden, die eine verbesserte Leitfähigkeit bei gleichzeitig akzeptablem spezifischen Gewicht aufweisen, welches gegenüber dem bekannter, auf Nickel-beschichteten Kohlenstofffasern basierten Verbundwerkstoffen um bis zu ca. 25 % reduziert werden kann. Darüber hinaus wurde gefunden, dass insbesondere die Volumenleitfähigkeit, d.h. die Leitfähigkeit in Dickenrichtung der Verbundwerkstoffe, wesentlich gegenüber bekannten Verbundwerkstoffen, in welche z.B. Kupfernetzwerke zur Verbesserung der Leitfähigkeit eingelegt sind, erhöht werden kann.

Die erfindungsgemäße leitfähig ausgerüstete Kohlenstofffaser kann auf üblichen Kohlenstofffasergarnen basieren, d.h. es kann sich um ein Garn aus Kurzfaserfilamenten oder um ein Garn aus Endlosfilamenten handeln. Im Falle, dass das Garn aus Endlosfilamenten besteht, kann die Anzahl der Filamente vorzugsweise im Bereich von 3000 bis 48000 Filamenten und besonders bevorzugt im Bereich von 6000 bis 24000 Filamenten liegen. Ebenso sind Garne mit einem Titer im Bereich von 200 bis 32000 tex bevorzugt und besonders bevorzugt solche Garne mit einem Titer im Bereich von 400 bis 16000 tex. Hinsichtlich der mechanischen Eigenschaften der Kohlenstofffaser, d.h. hinsichtlich deren Festigkeit und Modul, kann auf übliche Kohlenstofffasern zurückgegriffen werden. Ebenso kann die Kohlenstofffaser auf Garnen basieren, die aus Pech-, Polyacrylnitril-, Lignin- oder Viskosevorprodukten gewonnen wurden.

Bei dem die Metallbeschichtung aufbauenden Metall kann es sich um Nickel, Kobalt, Kupfer, Platin, Zinn, Cadmium, Zink, Silber, Gold usw. oder Legierungen von mindestens zwei dieser Metalle handeln. Es können auch verschiedene Metalle in unterschiedlichen Schichten auf die Kohlenstofffaserfilamente aufgetragen sein. Bevorzugt handelt es sich bei dem die Metallbeschichtung aufbauenden Metall um Kupfer.

Für eine gute Leitfähigkeit der erfindungsgemäßen Kohlenstofffasern ist es wichtig, dass die Metallbeschichtung gleichmäßig und kontinuierlich die Filamentoberfläche bedeckt. Übliche Dicken der Metallbeschichtung liegen im Bereich von 0,01 bis 0,5 $\mu$m. Im Rahmen der vorliegenden Erfindung ist eine Konzentration der Metallbeschichtung 10 bis 25 Gew.-% bevorzugt. Besonders bevorzugt liegt die Konzentration der Metallbeschichtung im Bereich von 10 bis 20 Gew.-%, bezogen auf das Gewicht der mit der Metallbeschichtung und Präparation versehenen Kohlenstofffaser. Bei derartigen Metallkonzentrationen ist zum einen eine gute Handhabung der Kohlenstofffasern gewährleistet, zum anderen lassen sich Verbundwerkstoffe mit hoher Leitfähigkeit bei niedrigem spezifischem Gewicht herstellen.

Bei den leitfähigen Nanopartikeln kann es sich beispielsweise um Kohlenstoff-Nanoröhrchen bzw. Carbon-Nanotubes (CNT), -Nanostäbchen, -Nanoringe,-Nanokalotten, Fullerene, Carbon Nanobuds, Graphene oder um Nanopartikel aus Übergangsmetallen handeln, die vorzugsweise Durchmesser im Bereich von 0,4 bis 100 nm aufweisen. Bevorzugt sind die in der Präparation enthaltenen leitfähigen Nanopartikel Kohlenstoff-Nanoröhrchen bzw. Carbon-Nanotubes, die ein- oder mehrwandig sein können. Die leitfähigen Nanopartikeln wirken entscheidend bei der Verbesserung der Leitfähigkeit von Verbundwerkstoffen mit. Insbesondere führen sie zu einer Verbesserung der Volumenleitfähigkeit der mit der erfindungsgemäßen, leitfähig ausgerüsteten Kohlenstofffaser hergestellten Verbundwerkstoffe. Es hat sich gezeigt, dass bei der Herstellung von Verbundwerkstoffen mit den erfindungsgemäßen Kohlenstofffasern die leitfähigen Nanopartikel zumindest teilweise aus der Präparation in das Matrixmaterial wandern, sich dort verteilen und so zu einer Verbesserung der Leitfähigkeit führen. In einer bevorzugten Ausführungsform beträgt die Konzentration der leitfähigen Nanopartikel 0,1 bis 0,5 Gew.-%, bezogen auf das Gewicht der mit der Metallbeschichtung und Präparation versehenen Kohlenstofffaser.

Die auf den metallbeschichteten Kohlenstofffasern befindliche Präparation basiert auf mindestens einem polymeren Binder, in den die leitfähigen Nanopartikel eingebettet sind. Hinsichtlich des mindestens einen polymeren Binders kann auf die üblicherweise für Präparationen von Kohlenstofffasern verwendeten Komponenten wie z.B. zu duromeren Polymeren reagierende Harze oder thermoplastische Polymere zurückgegriffen werden. Vorzugsweise umfasst die Präparation mindestens ein Epoxidharz und/oder mindestens ein Polyurethanharz. Mit Blick auf die Art und Beschaffenheit des Matrixmaterials, welches zusammen mit den erfindungsgemäßen Kohlenstofffasern zu Verbundwerkstoffen verarbeitet werden, kann die Präparation weitere Komponenten wie z.B. weitere zu duromeren Polymeren reagierende Harze oder thermoplastische Komponenten wie z.B. Polyamide, Polyhydroxyether oder thermoplastische Polyurethanharze enthalten, die auch in Form feiner Partikel vorliegen können.

Die Erfindung betrifft auch ein Verfahren zur Herstellung der erfindungsgemäßen leitfähig ausgerüsteten Kohlenstofffasern für Verbundwerkstoffe mit verbesserter Leitfähigkeit wobei das Verfahren die folgenden Verfahrensschritte umfasst:

> a) Vorlegen einer Kohlenstofffaser bestehend aus Kohlenstofffaserfilamenten,
> b) Durchführen eines Beschichtungsprozesses zur Ablagerung eines Metalls in Form einer Metallbeschichtung auf den Filamenten,
> c) Aufbringen einer Präparation auf die mit der Metallbeschichtung versehenen Filamente, wobei die Präparation leitfähige Nanopartikel enthält

wobei die Schritte b) und c) so ausgeführt werden, dass die Konzentration der Metallbeschichtung 8 bis 25 Gew.-% und die Konzentration der leitfähigen Nanopartikel 0,1 bis 1 Gew.-% beträgt, jeweils bezogen auf das Gewicht der mit der Metallbeschichtung und Präparation versehenen Kohlenstofffaser.

Das erfindungsgemäße Verfahren lässt sich als zweistufiges Verfahren durchführen, bei dem z.B. eine unbehandelte Kohlenstofffaser zunächst mit einer Metallbeschichtung versehen und nach der Beschichtung vorzugsweise auf eine Spule aufgewickelt wird. In einem späteren Verfahrensschritt kann dann die mit einer Metallbeschichtung versehene Kohlenstofffaser durch ein Präparationsbad gezogen werden, welches beispielsweise eine wässrige Dispersion des polymeren Binders sowie der leitfähigen Nanopartikel enthält.

Bevorzugt erfolgt die Metallbeschichtung und das Aufbringen der Präparation jedoch in einem kontinuierlichen Prozess direkt nacheinander, d.h. die Verfahrensschritte a) bis c) werden nacheinander in einem kontinuierlichen Prozess durchgeführt. Dabei kann der Beschichtungsprozess zur Ablagerung eines Metalls auf den Filamenten Wasch- und Trockenschritte umfassen, die der Beschichtung bzw. Ablagerung des Metalls voran gehen bzw. sich an die Beschichtung bzw. Ablagerung des Metalls anschließen.

Bei dem Beschichtungsprozesses zur Ablagerung eines Metalls in Form einer Metallbeschichtung auf den Filamenten der Kohlenstofffaser handelt es sich bevorzugt um einen Galvanisierungsprozess. Derartige Galvanisierungsprozesse zur Aufbringung von Metallbeschichtungen auf Kohlenstofffasern werden beispielsweise in der EP-A-0 149 763 A oder in dem Aufsatz Y.X. Gan "Electrolytic Metallic Coatings for Carbon Fibers", Materials and Manufacturing Processes, Vol. 9, No. 2, 263-280, 1994, Marcel Dekker Inc., beschrieben.

Bei den im Verfahrensschritt b) als Beschichtung aufgebrachten Metallen kann es sich um die zuvor genannten Metalle oder Metalllegierungen handeln. Vorzugsweise wird in Verfahrensschritt b) Kupfer auf die Filamente der Kohlenstofffaser aufgebracht. In diesem Fall wird das Kupfer bevorzugt aus einem wässrigen, Kupfersulfat enthaltenden Elektrolytbad unter Hinzufügung von Tartraten als Komplexbildner aufgetragen. Vorzugsweise wird die das Elektrolytbad verlassende und mit einer Metallbeschichtung versehene Kohlenstofffaser gewaschen, um überschüssigen Elektrolyten und lose anhaftende Substanzen zu entfernen, und anschließend in einem Trockner getrocknet.

Zur Aufbringung der Präparation auf die metallbeschichtete Kohlenstofffaser gemäß Verfahrensschritt c) des erfindungsgemäßen Verfahrens kann auf bekannte Maßnahmen zurückgegriffen werden. Beispielsweise kann die Präparation durch Imprägnieren der metallbeschichteten Kohlenstofffaser mit einer Schmelze oder einer Lösung des die leitfähigen Nanopartikel enthaltenden polymeren Binders aufgebracht werden. Bevorzugt ist der Verfahrensschritt c) des Aufbringens der Präparation ein Imprägnierschritt, bei dem die Kohlenstofffaserfilamente mit einer den polymeren Binder und die leitfähigen Nanopartikel enthaltenden wässrigen Dispersion imprägniert werden. Vorzugsweise sind die in der Präparation enthaltenen leitfähigen Nanopartikel Kohlenstoff-Nanoröhrchen (Carbon-Nanotubes).

Im Anschluss an die Imprägnierung wird die nun mit der Präparation versehene Kohlenstofffaser getrocknet. Hierbei hat sich eine Trocknungstemperatur im Bereich von 100 bis 160 °C als besonders geeignet erwiesen.

Mittels der erfindungsgemäßen, leitfähig ausgerüsteten Kohlenstofffasern lassen sich Verbundwerkstoffe bzw. Verbundwerkstoffbauteile herstellen, die eine hohe Leitfähigkeit und insbesondere eine hohe Volumenleitfähigkeit bei gleichzeitig niedrigem spezifischem Gewicht aufweisen. Daher betrifft die vorliegende Erfindung auch einen derartigen faserverstärkten Verbundwerkstoff, umfassend aus Kohlenstofffaserfilamenten bestehende leitfähig ausgerüstete Kohlenstofffasern, wobei die Kohlenstofffaserfilamente mit einem Metall beschichtet sind, d.h. eine Metallbeschichtung aufweisen, und eine polymerbasierte Matrix, wobei der Volumenanteil der Kohlenstofffasern im Verbundwerkstoff im Bereich 30 bis 70 Vol.-% liegt, und wobei der faserverstärkte Verbundwerkstoff dadurch gekennzeichnet ist, dass er des Weiteren leitfähige Nanopartikel enthält, die zumindest teilweise in der Matrix dispergiert sind, die Konzentration des Metalls im Verbundwerkstoff im Bereich von 2,5 bis 30 Gew.-%, bezogen auf das Gewicht der im Verbundwerkstoff enthaltenen Kohlenstofffasern und die Konzentration der leitfähigen Nanopartikel im Verbundwerkstoff im Bereich von 0,04 bis 0,65 Gew.-% liegt.

Bei der polymerbasierten Matrix kann es sich um eine Matrix aus einem Thermoplasten oder einem Duromeren handeln. Vorzugsweise handelt es sich bei der polymerbasierten Matrix um eine Epoxidharzmatrix, die jedoch auch für Verbundwerkstoffe übliche Zusatzstoffe wie z.B. thermoplastische Partikel zur Erhöhung der Schlagzähigkeit des Verbundwerkstoffs enthalten kann.

Die Erfindung wird anhand der nachfolgenden Figuren und Beispiele sowie Vergleichsbeispiele erläutert. Im Rahmen der vorliegenden Erfindung werden hierzu die folgenden Analysen- und Messmethoden angewandt:

Konzentration der Metallbeschichtung sowie die Konzentration der leitfähigen Nanopartikel auf den Filamenten der Kohlenstofffaser:

Die Konzentration der Metallbeschichtung sowie die Konzentration der leitfähigen Nanopartikel auf den Filamenten der Kohlenstofffaser wird unter Anwendung der EN ISO 10548ermittelt.

Dabei wird zunächst wird nach Verfahren A der EN ISO 10548 mittels Soxhlet-Extraktion die Präparation von der Kohlenstofffaser entfernt. Über thermogravimetrische Analyse des Extrakts unter Stickstoff-Atmosphäre wird dann die Konzentration an leitfähigen Nanopartikeln bestimmt.

Nach Entfernung der Präparation von der leitfähigen Kohlenstofffaser wird nach Verfahren B der EN ISO 10548 durch nasschemische Oxidation mit einem Schwefelsäure/Wasserstoffperoxid-Gemisch die Metallbeschichtung auf den Kohlenstofffaserfilamenten entfernt und durch Rückwägen nach Trocknung des Kohlenstofffaserrückstands die Konzentration der Metallbeschichung berechnet.

Herstellung von Laminaten für Probekörper zur Ermittlung der Leitfähigkeit:

Die Herstellung der Laminate erfolgte in Anlehnung an das in EN 2565 beschriebene Verfahren A (Nass - Auflege - Verfahren). Zur Herstellung der Kohlenstofffasergelege wurde Kohlenstofffasergarn auf einer Wickelplatte mit zwei parallelen und auf den Seiten der Wickelplatte gegenüber liegenden Formen mit seitlichen Stegen zur Begrenzung der Wickelbreite unter konstanter Fadenspannung aufgewickelt. Während des Aufwickelns wurde das Kohlenstofffasergarn mit vorgewärmtem Harz (Harzsystem RTM6; Fa. Hexcel) imprägniert. Die Imprägnierung erfolgte mittels Walzenimprägnierung, wobei die aufzutragende Harzmenge über Rakel eingestellt wurde. Die Bewicklung der Platte erfolgte mit einem Faserflächengewicht von ca. 300 g/m$^2$ pro Lage als Zielgröße. Die Anzahl der Lagen resultierte dann aus der angestrebten Dicke des Probekörpers, wobei ein Harzgehalt von 40 Vol.-% angestrebt wurde.

Bei der nachfolgenden Behandlung wurden die beiden auf den gegenüberliegenden Flächen angeordneten Laminataufbauten mit in 0°-Richtung unidirektional angeordneten Kohlenstofffasern zwei Stunden bei 180°C und unter einem Druck von10 bar im Autoklav gehärtet. Die Verwendung von Absauggeweben zur Aufnahme von überschüssigem Harz wie auch das Aufschneiden der Laminataufbauten an den Stirnseiten der Wickelplatte nach Erreichen der Topfzeit zum Abbau innerer Spannungen sind weitere Maßnahmen, um die in EN2565 geforderte Qualität der CFK - Prüfplatten zu erreichen, wobei alle Schritte so aufeinander abzustimmen sind, dass der Harzanteil des fertigen Laminat möglichst bei 40 ± 4 Vol.-% liegt.

Aus den erhaltenen Laminaten wurden Probekörper für die Ermittlung der Leitfähigkeit herausgeschnitten. Des Weiteren wurden den Laminaten Proben für die Herstellung von Schliffbildern und rasterelektronenmikroskopischen Aufnahmen sowie zur Ermittlung des Faservolumenanteils und der Konzentrationen an Metallbeschichtung entnommen.

Bestimmung der Leitfähigkeit:

Die Bestimmung der Leitfähigkeit erfolgte über die Bestimmung des elektrischen Widerstands in Anlehnung an DIN EN ISO 3915.

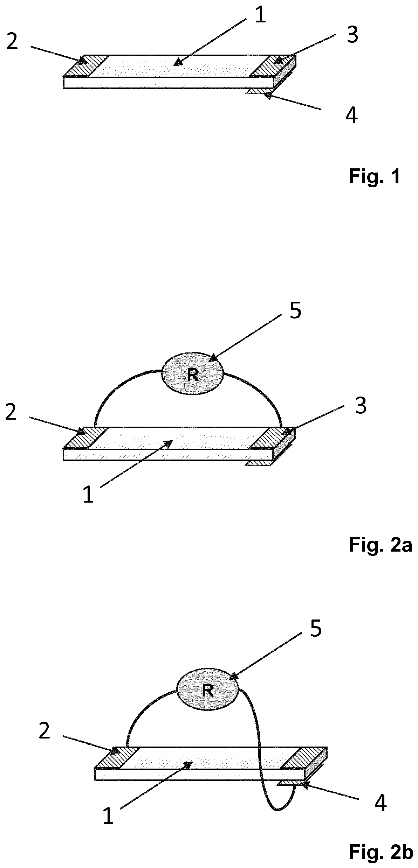

Aus den hergestellten Laminaten wurden jeweils drei Prüfkörper in den Dimensionen 140x10mm bereitgestellt. Auf den Prüfkörpern 1 wurden, wie in Figur 1 dargestellt, jeweils drei Kontaktflächen 2, 3, 4 mit einer jeweiligen Fläche von 200 mm$^2$ markiert.

Zur Verbesserung der elektrischen Kontakte wurden anschließend an den Kontaktflächen 2, 3, 4 von der Dicke des Probekörpers nacheinander 5% der Ausgangsdicke mit einer Fräsmaschine abgetragen. Auf die so behandelten Kontaktflächen 2, 3, 4 wurde eine ca.10 $\mu$m dicke Schicht Kontaktsilber aufgetragen und daraufhin deren Dicke mit einer Dickenmessuhr bestimmt.

Der elektrische Widerstand R wurde gemäß den Messpunkten in den Figuren 2a und 2b unter Anwendung des Vier-Pol-Verfahrens, wie in der DIN EN ISO 3915 gefordert, mit einem Multimeter 5 (z.B. Keithley Model 2000) bestimmt.

Der spezifische elektrische Widerstand $\rho$, ausgedrückt in Ohmzentimeter [$\Omega$ cm], wurde nach folgender Gleichung berechnet:

$$\rho = \frac{R \cdot A}{L} \ [\Omega \ cm], \hspace{3cm} (I)$$

mit:

$\rho$ = spezifischer elektrischer Widerstand [$\Omega$ cm];

R = gemessener Widerstand [$\Omega$];

A = Dicke x Breite des Probekörpers [cm$^2$];

L = 11,5 cm (= Abstand der Messzangen, d.h. die Strecke entlang des Probekörpers, an der der zu messende Widerstand anliegt).

Die Leitfähigkeit $\sigma$ in [S/m] berechnet sich aus dem Kehrwert des spezifischen elektrischen Widerstands:

$$\sigma = \frac{1}{\rho} \ [S/m] \hspace{3cm} (II)$$

Die Leitfähigkeit, die über die in Figur 2a dargestellte Messanordnung 1 ermittelt wurde, bei der sich also die Elektroden an den Kontaktflächen 2, 3, an den Enden des Probekörpers und auf derselben Probenkörperoberfläche befanden, ein Maß für die Leitfähigkeit in Faserrichtung des Probekörpers. Dagegen ist die Leitfähigkeit, die über die in Figur 2b dargestellte Messanordnung 2 ermittelt wurde, bei der sich also die Elektroden an den Kontaktflächen 2, 4, an den Enden des Probekörpers und auf unterschiedlichen Probenkörperoberflächen befanden, ein Maß für die Leitfähigkeit quer zur Faserrichtung, d.h. in Dickenrichtung des Probekörpers, und damit ein Maß für die Volumenleitfähigkeit.

Faservolumenanteil und Konzentration der Metallbeschichtung im Verbundwerkstoff:

Der Volumenanteil der reinen Kohlenstofffasern im Verbundwerkstoff sowie deren Masse im Probekörper wird nach EN ISO 10548, Verfahren B, über Extraktion mittels Schwefelsäure/Wasserstoffperoxid ermittelt.

In einem weiteren Schritt wird über elektrogravimetrische Bestimmung aus dem so erhaltenen, das Kupfer in Ionenform enthaltenden Extrakt die Masse an Kupfer ermittelt, die im Probekörper enthalten war. Mit der Masse der im Probekörper enthaltenen Kohlenstofffasern ergibt sich die Konzentration des Metalls im Verbundwerkstoff, bezogen auf das Gewicht der im Verbundwerkstoff enthaltenen reinen Kohlenstofffaser.

Beispiel 1:

Es wurde ein unbehandeltes und trockenes Kohlenstofffaserfilamentgarn mit einem Garntiter von 800 tex und 12000 Filamenten vorgelegt. Das Kohlenstofffaserfilamentgarn wurde nach dem in dem Aufsatz von Y.X. Gan "Electrolytic Metallic Coatings for Carbon Fibers", Materials and Manufacturing Processes, Vol. 9, No. 2, 263-280, 1994, Marcel Dekker Inc., beschriebenen galvanischen Verfahren mit Kupfer beschichtet. Das Verfahren wurde unter Verwendung eines auf 23°C temperierten Kupfersulfatbades unter Zusatz von Kaliumnatriumtartrat bei einer Zusammensetzung des Elektrolytbades von 80g $CuSO_4$ * 5 $H_2O$, 100 g $KNaC_4H_4O_6$ * 5 $H_2O$, 30 g $K_2CO_3$ und 1 Liter $H_2O$ durchgeführt. Das unbehandelte Kohlenstofffaserfilamentgarn wurde über eine außerhalb des galvanischen Bades angeordnete erste Kathodenwalze und anschließend innerhalb des galvanischen Bades über einen ersten beweglichen Spreizstab (Messingstab) geführt und dabei an einer im Bad befindlichen Kupferanode vorbeigeführt. Anschließend wurde das bereits teilweise mit einer Metallbeschichtung versehene Kohlenstofffaserfilamentgarn über eine außerhalb des galvanischen Bades angeordnete zweite Kathodenwalze geführt und danach abermals im galvanischen Bad über bewegliche Spreizstäbe an der Kupferanode innerhalb des galvanischen Bades vorbeigeführt. Die Fadengeschwindigkeit betrug 0,3m/min. Von einer an die Kathoden und die Kupferanode angeschlossenen Spannungsquelle wurde eine Stromspannung von 15V bereitgestellt.

Nach Aufbringen der Metallbeschichtung wurde das mit Kupfer versehene Kohlenstofffaserfilamentgarn durch ein Wasser enthaltendes Waschbad geführt, um überschüssigen Elektrolyten auszuwaschen. Anschließend durchlief das beschichtete Kohlenstofffaserfilamentgarn einen Trockner.

Nach der Trocknung wurde das beschichtete Kohlenstofffaserfilamentgarn zur Aufbringung der Präparation durch ein Bad mit einer wässrigen Dispersion geführt, welche als Feststoffkomponenten eine Polyurethanharzzusammensetzung, sowie mehrwandige Kohlenstoff-Nanoröhrchen enthielt. Der Feststoffanteil der Dispersion betrug 5 Gew.-%. Das Bad war auf eine Temperatur von 23°C temperiert.

Die im Präparationsbad enthaltene Dispersion wurde durch Zusammenfügen zweier Ausgangsdispersionen erhalten. Die erste Ausgangsdispersion umfasste ein Polyester-basiertes Polyurethanharz mit einem Erweichungsbereich von 180-185°C (Vondic 1230 NE; Fa. Daininppon Ink & Chemicals) als Dispersion in Wasser. Die erste Ausgangsdispersion wurde hinsichtlich des Feststoffgehalts so verdünnt, dass eine Feststoffkonzentration von 1 Gew.-% resultierte.

Die zweite Ausgangsdispersion hatte einen Feststoffgehalt von ca. 26 Gew.-% aus einem Polyester-basierten Urethanpolymer, welches mit 5 Gew.-% Kohlenstoff-Nanoröhrchen modifiziert war. Die zweite Ausgangsdispersion wurde hinsichtlich ihres Feststoffgehalts so verdünnt, dass eine Feststoffkonzentration von 4 Gew.-% resultierte.

Erste und zweite Ausgangsdispersion wurden so zusammengemischt, dass die Feststoffgehalte der resultierenden Dispersion, d.h. das Polyester-basierte Polyurethanharz (Vondic 1230 NE) auf der einen Seite sowie das Polyester-basierte Urethanpolymer und die Kohlenstoff-Nanoröhrchen auf der anderen Seite im Verhältnis 20:80 vorlagen.

Nach Durchlaufen des die wässrige Dispersion der Präparation enthaltenden Bades wurde das nun auch mit der Präparation versehene Garn bei einer Temperatur von 150°C getrocknet.

Das erhaltene mit Präparation und Kupferbeschichtung versehene Kohlenstofffasergarn wies einen Kupfergehalt von 13,14 Gew.-% und eine Konzentration an Kohlenstoff-Nanoröhrchen von 0,13 Gew.-% auf, jeweils bezogen auf das Gewicht der mit Kupferbeschichtung und Präparation versehenen Kohlenstofffaser. Der Präparationsanteil der Kohlenstofffaser lag bei 3,51 Gew.-%.

Beispiel 2:

Es wurde wie in Beispiel 1 vorgegangen. Abweichend von Beispiel 1 wurde an die Kathoden und die Kupferanode eine Spannung von 4,5 V angelegt.

Für die Aufbringung der Präparation wurde als erste Ausgangsdispersion eine Dispersion mit einer Epoxidharzzusammensetzung eingesetzt, die ein erstes Epoxidharz H1 und ein zweites Epoxidharz H2 umfasste, wobei das Gewichtsverhältnis der Harze H1 und H2 1,2 betrug. Das erste Epoxidharz H1 hatte einen Epoxidwert von ca. 2000 mmol/kg und ein mittleres Molekulargewicht $M_N$ von 900 g/Mol und war bei Raumtemperatur fest; das zweite Epoxidharz H2 hatte einen Epoxidwert von ca. 5400 mmol/kg und ein mittleres Molekulargewicht $M_N$ von <700 g/Mol und war bei Raumtemperatur flüssig. Die erste Ausgangsdispersion wurde auf einen Harzanteil von 2,2 Gew.-% verdünnt.

Die zweite Ausgangsdispersion hatte einen Feststoffgehalt von ca. 6,2 Gew.-% aus einen Polyhydroxyether, Kohlenstoff-Nanoröhrchen sowie Tensiden im Verhältnis 60:30:10. Auch die zweite Ausgangsdispersion wurde auf einen Feststoffgehalt von 2,2 Gew.-% verdünnt.

Erste und zweite Ausgangsdispersion wurden so zusammengemischt, dass die Feststoffgehalte der resultierenden Dispersion, d.h. H1 und H2 auf der einen Seite sowie Polyhydroxyether, Kohlenstoff-Nanoröhrchen sowie Tenside auf der anderen Seite im Verhältnis 50:50 vorlagen.

Das erhaltene mit Präparation und Kupferbeschichtung versehene Kohlenstofffasergarn wies einen Kupfergehalt von 11,45 Gew.-% und eine Konzentration an Kohlenstoff-Nanoröhrchen von 0,27 Gew.-% auf, jeweils bezogen auf das Gewicht der mit Kupferbeschichtung und Präparation versehenen Kohlenstofffaser. Der Präparationsanteil der Kohlenstofffaser lag bei 2,1 Gew.-%.

Beispiel 3:

Es wurde wie in Beispiel 2 vorgegangen. Abweichend von Beispiel 2 wurde die erste Ausgangsdispersion auf eine Konzentration von 1,5 Gew.-% verdünnt.

Erste und zweite Ausgangsdispersion wurden so zusammengemischt, dass die Feststoffgehalte der resultierenden Dispersion, d.h. H1 und H2 auf der einen Seite sowie Polyhydroxyether, Kohlenstoff-Nanoröhrchen sowie Tenside auf der anderen Seite im Verhältnis 50:50 vorlagen.

Das erhaltene mit Kupferbeschichtung und Präparation versehene Kohlenstofffasergarn wies einen Kupfergehalt von 10,7 Gew.-% und eine Konzentration an Kohlenstoff-Nanoröhrchen von 0,12 Gew.-% auf, jeweils bezogen auf das Gewicht der mit Kupferbeschichtung und Präparation versehenen Kohlenstofffaser. Der Präparationsanteil der Kohlenstofffaser lag bei 0,94 Gew.-%.

Vergleichsbeispiel 1:

Auf ein Kohlenstofffasergarn gemäß Beispiel 1 wurde eine Kupferbeschichtung, wie in Beispiel 1 beschrieben, sowie anschließend eine Präparation aufgetragen. Abweichend von Beispiel 1 enthielt das Präparationsbad jedoch nur die erste Ausgangsdispersion mit der Epoxidharzzusammensetzung wie in Beispiel 2 angegeben. Die Feststoffkonzentration der Dispersion betrug 4,3 Gew.-%.

Das erhaltene mit Präparation und Kupferbeschichtung versehene Kohlenstofffasergarn wies einen Kupfergehalt von 13,22 Gew.-% auf, bezogen auf das Gewicht der mit Kupferbeschichtung und Präparation versehenen Kohlenstofffaser. Der Präparationsanteil der Kohlenstofffaser lag bei 2,81 Gew.-%.

Beispiele 4 bis 6 und Vergleichsbeispiele 2 bis 5:

Es wurden aus den gemäß Beispielen 1 bis 3 und gemäß Vergleichsbeispiel 1 hergestellten Kohlenstofffasergarnen nach der zuvor beschriebenen Methode Laminate und Probekörper hergestellt und für diese Laminate bzw. Probekörper die Materialeigenschaften wie insbesondere die Leitfähigkeit ermittelt (Beispiele 4 bis 6; Vergleichsbeispiel 2). Darüber hinaus wurden entsprechende Laminate mit folgender Konfiguration hergestellt und untersucht:

Vergleichsbeispiel 3 : Als Verstärkungsfaser wurde eine Standard-Kohlenstofffaser mit einer Präparation auf Polyurethanharzbasis ohne Nanopartikel eingesetzt (Tenax HTS40 F13 12K; Fa. Toho Tenax Europe GmbH).

Vergleichsbeispiel 4: Als Verstärkungsfaser wurde eine Standard-Kohlenstofffaser mit einer Präparation auf Polyurethanharzbasis eingesetzt (Tenax HTS40 F13 12K; Fa. Toho Tenax Europe GmbH). Bei der Laminatherstellung wurde ein Kupfergewebe vom Typ Astrostrike CU015 (Fa. Astrostrike) mit einem Flächengewicht von 73 $g/m^2$ auf eine der Oberflächen des Laminats auflaminiert. Auf dieser Oberfläche befanden sich die Kontaktflächen zur Ermittlung der Leitfähigkeit in Faserrichtung des Probekörpers (Messanordnung 1; Fig. 2a).

Vergleichsbeispiel 5: Als Verstärkungsfaser wurde eine kommerziell erhältliche Kohlenstofffaser mit einer Nickelbeschichtung und einer Präparation auf Polyurethanbasis eingesetzt (Tenax HTS40 A23 12K; Fa. Toho Tenax Europe GmbH). Die Präparation enthielt keine Nanopartikel. Die Nickel-beschichtete Kohlenstofffaser wies eine Nickel-Konzentration von ca. 30 Gew.-% auf, bezogen auf das Gewicht der mit Nickelbeschichtung und Präparation versehenen Kohlenstofffaser.

Die Eigenschaften der erhaltenen Laminate sind in den Tabellen 1 und 2 aufgeführt.

Tabelle 1:

| | Anzahl Lagen des Laminats | FVA [%] [1] | Laminatdichte [g/cm$^3$] | Laminatdicke [mm] | Konzentration Metallbeschicht. (bez. auf unbeh. C-Faser) | CNT-Konzentration im Laminat [2] |
|---|---|---|---|---|---|---|
| **Beispiel 4** | 8 | 41,89 | 1,61 | 2,1927 | 15,66 | 0,07 |
| **Beispiel 5** | 8 | 52,36 | 1,58 | 2,1865 | 13,2 | 0,20 |
| **Beispiel 6** | 8 | 54,54 | 1,62 | 3,1122 | 12,1 | 0,09 |
| **Vergleichsbeispiel 2** | 8 | 47,23 | 1,54 | 2,3292 | 15,66 | ./. |
| **Vergleichsbeispiel 3** | 8 | 65,15 | 1,56 | 2,0238 | ./. | ./. |
| **Vergleichsbeispiel 4** | 8 | 64,12 | 1,60 | 2,0161 | n.a. [3] | ./. |
| **Vergleichsbeispiel 5** | 14 | 45,98 | 2,01 | 2,4581 | 45 | ./. |
| [1] FVA = Faservolumenanteil im Laminat [%]<br>[3] CNT = Kohlenstoff-Nanoröhrchen (carbein nano tubes)<br>[3] n.a.; Verwendung CU-Gewebe | | | | | | |

Tabelle 2:

| | Spez. Widerstand [$\Omega$*cm] | | Leitfähigkeit [S/m] [S/m] | | spez. Leitfähigk. [%] (norm. auf Std. C-Faser) | | spez. Leitfähigk. [%] (norm. auf Std. C-Faser + 60 Vol.-% FVA) | |
|---|---|---|---|---|---|---|---|---|
| | Messanordnung 1 | Messanordnung 2 | Messanordnung 1 | Messanordnung 2 | Messanordnung 1 | Messanordnung 2 | Messanordnung 1 | Messanordnung 2 |
| Beispiel 4 | 0,0020 | 0,0023 | 51243 | 42981 | 205 | 224 | 320 | 349 |
| Beispiel 5 | 0,0021 | 0,0022 | 46792 | 44650 | 188 | 233 | 233 | 290 |
| Beispiel 6 | 0,0027 | 0,0034 | 37405 | 29317 | 484 | 566 | 550 | 642 |
| Vergleichsbeispiel 2 | 0,0027 | 0,0030 | 36984 | 32861 | 148 | 171 | 205 | 237 |
| Vergleichsbeispiel 3 | 0,0040 | 0,0052 | 24945 | 19169 | 100 | 100 | 100 | 100 |
| Vergleichsbeispiel 4 | 0,0004 | 0,0026 | 238158 | 37966 | 955 | 198 | 970 | 201 |
| Vergleichsbeispiel 5 | 0,0001 | 0,0002 | 748454 | 610490 | 3000 | 3185 | 4251 | 4513 |

**Patentansprüche**

1.  Leitfähig ausgerüstete Kohlenstofffaser, bestehend aus Kohlenstofffaserfilamenten, welche eine Metallbeschichtung aufweisen, **dadurch gekennzeichnet,**

    - **dass** die Kohlenstofffaserfilamente eine sich auf der Metallbeschichtung befindliche Präparation auf Basis mindestens eines polymeren Binders aufweisen, welche leitfähige Nanopartikel enthält und
    - **dass** die Konzentration der Metallbeschichtung 8 bis 25 Gew.-% und die Konzentration der leitfähigen Nanopartikel 0,1 bis 1 Gew.-% beträgt, jeweils bezogen auf das Gewicht der mit der Metallbeschichtung und Präparation versehenen Kohlenstofffaser.

2.  Kohlenstofffaser nach Anspruch 1, **dadurch gekennzeichnet, dass** die Konzentration der leitfähigen Nanopartikel 0,1 bis 0,5 Gew.-% beträgt, bezogen auf das Gewicht der mit der Metallbeschichtung und Präparation versehenen Kohlenstofffaser.

3.  Kohlenstofffaser nach Anspruch 1 oder 2, **dadurch gekennzeichnet, dass** die leitfähigen Nanopartikel Kohlenstoff-Nanoröhrchen sind.

4.  Kohlenstofffaser nach einem oder mehreren der Ansprüche 1 bis 3, **dadurch gekennzeichnet, dass** die Konzentration der Metallbeschichtung 10 bis 25 Gew.-% beträgt.

5.  Kohlenstofffaser nach einem oder mehreren der Ansprüche 1 bis 4, **dadurch gekennzeichnet, dass** das die Metallbeschichtung aufbauende Metall Kupfer ist.

6.  Verfahren zur Herstellung von Kohlenstofffasern für Verbundwerkstoffe mit verbesserter Leitfähigkeit umfassend die folgenden Verfahrensschritte:

    a) Vorlegen einer Kohlenstofffaser bestehend aus Kohlenstofffaserfilamenten,
    b) Durchführen eines Beschichtungsprozesses zur Ablagerung eines Metalls in Form einer Metallbeschichtung auf den Filamenten,
    c) Aufbringen einer Präparation auf die mit der Metallbeschichtung versehenen Filamente, wobei die Präparation leitfähige Nanopartikel enthält,

    wobei die Schritte b) und c) so ausgeführt werden, dass die Konzentration der Metallbeschichtung 8 bis 25 Gew.-% und die Konzentration der leitfähigen Nanopartikel 0,1 bis 1 Gew.-% beträgt, jeweils bezogen auf das Gewicht der mit der Metallbeschichtung und Präparation versehenen Kohlenstofffaser.

7.  Verfahren nach Anspruch 6, **dadurch gekennzeichnet, dass** die Verfahrensschritte a) bis c) nacheinander in einem kontinuierlichen Prozess durchgeführt werden.

8.  Verfahren nach Anspruch 6 oder 7, **dadurch gekennzeichnet, dass** der Verfahrensschritt b) ein Galvanisierprozess ist.

9.  Verfahren nach einem oder mehreren der Ansprüche 6 bis 8, **dadurch gekennzeichnet, dass** das in Verfahrensschritt b) abgelagerte Metall Kupfer ist.

10. Verfahren nach einem oder mehreren der Ansprüche 6 bis 9, **dadurch gekennzeichnet, dass** der Verfahrensschritt c) des Aufbringens der Präparation ein Imprägnierschritt ist, bei dem die Kohlenstofffaserfilamente mit einer die leitfähigen Nanopartikel enthaltenden wässrigen Dispersion imprägniert werden.

11. Verfahren nach Anspruch 10, **dadurch gekennzeichnet, dass** die Dispersion des Weiteren mindestens ein Epoxidharz und/oder mindestens ein Polyurethanharz enthält.

12. Faserverstärkter Verbundwerkstoff, umfassend aus Kohlenstofffaserfilamenten bestehende Kohlenstofffasern, wobei die Kohlenstofffaserfilamente mit einem Metall beschichtet sind, und eine polymerbasierte Matrix, wobei der Volumenanteil der Kohlenstofffasern im Verbundwerkstoff 30 bis 70 Vol.-% beträgt, **dadurch gekennzeichnet, dass** der Verbundwerkstoff des Weiteren leitfähige Nanopartikel enthält, die zumindest teilweise in der Matrix dispergiert sind, dass die Konzentration des Metalls im Verbundwerkstoff im Bereich von 2,5 bis 30 Gew.-% liegt, bezogen auf das Gewicht der im Verbundwerkstoff enthaltenen Kohlenstofffasern und dass die Konzentration der leitfähigen Nanopartikel im Verbundwerkstoff im Bereich von 0,04 bis 0,65 Gew.-% liegt.

13. Faserverstärkter Verbundwerkstoff nach Anspruch 12, **dadurch gekennzeichnet, dass** die leitfähigen Nanopartikel Kohlenstoff-Nanoröhrchen sind.


**Claims**

1. Conductivly finished carbon fiber made up of carbon-fiber filaments with a metal coating, **characterized in that**

    - the carbon-fiber filaments comprise a preparation disposed on the metal coating, the preparation being based on at least one polymeric binder and comprising conductive nanoparticles, and that
    - the concentration of the metal coating is 8 to 25 wt % and the concentration of the conductive nanoparticles is 0.1 to 1 wt %, relative to the weight of the carbon fibers which are provided with the metal coating and the preparation.

2. Carbon fiber according to claim 1, **characterized in that** the concentration of the conductive nanoparticles is 0.1 to 0.5 wt % relative to the weight of the carbon fibers which are provided with the metal coating and the preparation.

3. Carbon fiber according to claim 1 or 2, **characterized in that** the conductive nanoparticles are carbon nanotubes.

4. Carbon fiber according to one or more of claims 1 to 3, **characterized in that** the concentration of the metal coating is 10 to 25 wt %.

5. Carbon fiber according to one or more of claims 1 to 4, **characterized in that** the metal used to build up the metal coating is copper.

6. Method for producing carbon fibers for composite materials with improved conductivity, comprising the following processing steps:

    a) providing a carbon fiber comprised of carbon-fiber filaments,
    b) carrying out a coating process for depositing a metal in the form of a metal coating on the filaments,
    c) applying a preparation onto the filaments provided with the metal coating, wherein the preparation contains conductive nanoparticles,

    wherein steps b) and c) are executed in such a manner that the concentration of the metal coating is 8 to 25 wt % and the concentration of the conductive nanoparticles is 0.1 to 1 wt %, relative to the weight of the carbon fibers which are provided with the metal coating and the preparation.

7. Method according to claim 6, **characterized in that** the processing steps a) to c) are carried out one after the other in a continuous process.

8. Method according to claim 6 or 7, **characterized in that** processing step b) is a galvanization process.

9. Method according to one or more of claims 6 to 8, **characterized in that** the metal deposited in processing step b) is copper.

10. Method according to one or more of claims 6 to 9, **characterized in that** processing step c) of applying the preparation is an impregnation step in which the carbon-fiber filaments are impregnated with an aqueous dispersion containing the conductive nanoparticles.

11. Method according to claim 10, **characterized in that** the dispersion further contains at least one epoxide resin and/or at least one polyurethane resin.

12. Fiber-reinforced composite material comprising carbon fibers made up of carbon-fiber filaments, wherein the carbon-fiber filaments are coated with a metal, and a polymer-based matrix, wherein the volume fraction of carbon fibers in the composite material is 30 to 70 vol.-%, **characterized in that** the composite material further comprises conductive nanoparticles which are at least partially dispersed in the matrix, that the concentration of the metal in the composite material is in the range of 2.5 to 30 wt % relative to the weight of the carbon fibers contained in the composite material, and that the concentration of the conductive nanoparticles in the composite material is in the range of 0.04 to 0.65 wt %.

**13.** Fiber-reinforced composite material according to claim 12, **characterized in that** the conductive nanoparticles are carbon nanotubes.

**Revendications**

**1.** Fibre de carbone munie d'un apprêt conducteur, constituée de filaments de fibre de carbone qui présentent un revêtement métallique, **caractérisée**

- **en ce que** les filaments de fibre de carbone comportent, par-dessus le revêtement métallique, une préparation à base d'au moins un liant polymère, qui contient des nanoparticules conductrices,
- et **en ce que** la proportion du revêtement métallique vaut de 8 à 25 %, et la proportion des nanoparticules conductrices vaut de 0,1 à 1 %, proportions exprimées chacune en poids rapporté au poids de la fibre de carbone munie du revêtement métallique et de la préparation.

**2.** Fibre de carbone conforme à la revendication 1, **caractérisée en ce que** la proportion des nanoparticules conductrices vaut de 0,1 à 0,5 %, en poids rapporté au poids de la fibre de carbone munie du revêtement métallique et de la préparation.

**3.** Fibre de carbone conforme à la revendication 1 ou 2, **caractérisée en ce que** les nanoparticules conductrices sont des nanotubes de carbone.

**4.** Fibre de carbone conforme à l'une ou plusieurs des revendications 1 à 3, **caractérisée en ce que** la proportion du revêtement métallique vaut de 10 à 25 % en poids.

**5.** Fibre de carbone conforme à l'une ou plusieurs des revendications 1 à 4, **caractérisée en ce que** le métal constituant le revêtement métallique est du cuivre.

**6.** Procédé de fabrication de fibres de carbone pour matériaux composites à conductivité améliorée, lequel procédé comporte les étapes suivantes :

a) prendre une fibre de carbone constituée de filaments de fibre de carbone,
b) effectuer une opération de revêtement afin de déposer un métal, sous forme de revêtement métallique, sur les filaments,
c) et déposer, sur les filaments munis du revêtement métallique, une préparation qui contient des nanoparticules conductrices,

étant entendu que les étapes (b) et (c) sont réalisées de telle sorte que la proportion du revêtement métallique vaut de 8 à 25 % et la proportion des nanoparticules conductrices vaut de 0,1 à 1 %, proportions exprimées chacune en poids rapporté au poids de la fibre de carbone munie du revêtement métallique et de la préparation.

**7.** Procédé conforme à la revendication 6, **caractérisé en ce que** les étapes de procédé (a) à (c) sont effectuées l'une après l'autre en un procédé continu.

**8.** Procédé conforme à la revendication 6 ou 7, **caractérisé en ce que** l'étape de procédé (b) est une opération de galvanisation.

**9.** Procédé conforme à l'une ou plusieurs des revendications 6 à 8, **caractérisé en ce que** le métal déposé lors de l'étape de procédé (b) est du cuivre.

**10.** Procédé conforme à l'une ou plusieurs des revendications 6 à 9, **caractérisé en ce que** l'étape de procédé (c) de dépôt de la préparation est une étape d'imprégnation, au cours de laquelle les filaments de fibre de carbone sont imprégnés d'une dispersion aqueuse contenant les nanoparticules conductrices.

**11.** Procédé conforme à la revendication 10, **caractérisé en ce que** la dispersion contient en outre au moins une résine époxy et/ou au moins une résine polyuréthane.

**12.** Matériau composite à renfort de fibres, comprenant des fibres de carbone constituées de filaments de fibre de carbone, lesquels filaments de fibre de carbone sont revêtus d'un métal, et une matrice à base de polymère, la proportion des fibres de carbone dans le matériau composite valant de 30 à 70 % en volume, **caractérisé en ce que** le matériau composite contient en outre des nanoparticules conductrices qui sont dispersées, au moins en partie, dans la matrice, **en ce que** la proportion de métal dans le matériau composite vaut de 2,5 à 30 %, en poids rapporté au poids des fibres de carbone contenues dans le matériau composite, et **en ce que** la proportion des nanoparticules conductrices dans le matériau composite vaut de 0,04 à 0,65 % en poids.

**13.** Matériau composite à renfort de fibres, conforme à la revendication 12, **caractérisé en ce que** les nanoparticules conductrices sont des nanotubes de carbone.

**Fig. 1**

**Fig. 2a**

**Fig. 2b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0149763 A
- WO 2010007163 A
- US 20100260998 A
- US 20100104868 A
- WO 2011000394 A

**In der Beschreibung aufgeführte Nicht-Patentliteratur**

- Electrolytic Metallic Coatings for Carbon Fibers. Materials and Manufacturing Processes. Marcel Dekker Inc, 1994, vol. 9, 263-280
- Electrolytic Metallic Coatings for Carbon Fibers. **Y.X. GAN.** Materials and Manufacturing Processes. Marcel Dekker Inc, 1994, vol. 9, 263-280